# EUROPÄISCHE PATENTSCHRIFT

(11) **EP 0 672 708 B1**
(45) Veröffentlichungstag und Bekanntmachung des Hinweises auf die Patenterteilung: **14.07.1999**
(21) Anmeldenummer: 94103876.2
(22) Anmeldetag: 14.03.1994
(51) Int. Cl.: C08J 9/00, C08J 9/36, C08J 9/40, C08L 61/06

(54) **Verfahren zum Trocknen von Schaumformlingen**
Process for drying foam moldings
Procédé de séchage de pièces de mousse

(43) Veröffentlichungstag der Anmeldung: 20.09.1995
(73) Patentinhaber: Eco-Schaum Lizenz AG, 6304 Zug (CH)
(72) Erfinder: Schöllhorn, Wolf-Dietrich, 67269 Grünstadt (DE)
(74) Vertreter: Pietruk, Claus Peter

(56) Entgegenhaltungen:
- EP-A- 0 049 768
- DE-A- 4 036 112
- GB-A- 1 161 338
- US-A- 3 821 337

## Beschreibung

Die Erfindung betrifft ein Verfahren nach dem Oberbegriff des unabhängigen Anspruches.

Ein solches Verfahren ist geeignet zum Trocknen von aufgeschäumten, Feuchtigkeit enthaltenden Schaumformlingen, insbesondere auf Harnstoff/Methanol-, Phenol- oder Melaminbasis und ein offenzelliges Schaumgefüge aufweisend, die in einer Trokkenstufe unter Einwirkung von Mikrowellenstrahlung bei gleichzeitigem Unterdruck, unter spezifischen Bedingungen, getrocknet werden.

Schaumkörper haben grundsätzlich die Eigenschaft, daß sie wärmeisolierend wirken. Aus diesem Grunde schreitet eine Trocknung nach konventioneller Weise - Zuführung von Wärmeenergie von außen - nur sehr langsam zum Schaumkern voran. Es hat sich zudem gezeigt, daß beim Trocknen von größeren Schaumblöcken, z.B. 1/4 bis 2 m³ Schaumblöcken auf Harnstöff/Methanalharzbasis das konventionelle Trocknen zu erheblichen Spannungen in den Schaumkörpern führt und diese gegen Ende der Trocknungszeit reißen.

Das Trocknen eines Schaumblockes mit den Ausmaßen von ca. 1 x 1 x 2 m benötigt bei 50° bis 70° C ca. 3 bis 4 Wochen, um auch im Schaumkern die Gleichgewichtsfeuchte erreichen zu können.

Solche Blöcke überstehen diese Trocknung jedoch nicht oder nur selten, da sie aufgrund der auftretenden Spannungen zerreißen. Ferner stellt die extrem lange Trocknungszeit ein erhebliches wirtschaftliches Problem dar.

Das EP 0 266 967 offenbart ein Verfahren zum Trocknen von Formlingen auf Polystyrolbasis, beschichtet in Dünnwandtechnik mit einer keramische Bestandteile enthaltenden thixotropischen Schicht, bestehend aus Kieselsäure, Ton und Wasser, in zwei verschiedenen aufeinanderfolgenen Trockenstufen, unter für die jeweilige Stufe spezifischen Bedingungen. Das Verfahren ist auf Trocknen von feuerfesten Formlingen gerichtet, die nach der 2-Stufen-Trocknung in einem konvektiven Luftstrom, Mikrowellenbehandlung, unter bestimmten Bedingungen, die dünne, keramische Bestandteile enthaltende Beschichtung als eine glatte, gleichförmig verteilte Beschichtung aufweisen.

Die GB-A-1,161,338 lehrt bereits, geschäumte Phenolharzbretter zu erwärmen. Es wird vorgeschlagen, nach der Aushärtung einen Neutralisierungsschritt durchzuführen, bei welchem unter erhöhtem Druck ein gasförmiges alkalisches Mittel wie Ammoniakgas zum Eindringen in das Brett gebracht wird. Es wird weiter vorgeschlagen, daß der Schaumstoff vor oder während des Neutralisierungsschrittes einem Vakuum ausgesetzt wird.

Die EP 0 049 768 beschreibt die Behandlung eines Schaumstoffes mit Mikrowellenenergie.

Die US-PS 3,821,337 schlägt vor, daß nach der Schäumung und Aushärtung des Harzes ein fertiges Phenolharzbrett in einem Mikrowellenresonanzhohlraum einer Mikrowellenbehandlung zur Nachhärtung ausgesetzt werden.

Der vorliegenden Erfindung liegt die Aufgabe zugrunde, ein Verfahren zum Trocknen auch von großvolumigen Schaumformlingen bereitzustellen, das ein schnelles und gleichmäßiges Austrocknen der Schaumformlinge bewirkt und somit die Gefahr von Rißbildungen im Formling durch Schwindung stark reduziert bzw. ganz vermeidet.

Diese Aufgabe wird durch das Merkmal des Hauptanspruches gelöst.

Weitere bevorzugte Ausführungsformen des beanspruchten Verfahrens sind den Unteransprüchen zu entnehmen.

Schaumformlinge, die durch das erfindungsgemäße Verfahren behandelt werden können, sind beispielsweise Schaumblöcke auf Harnstoff/Methanal-Harzbasis, Phenol/Methanal-Harzbasis oder Melamin/Methanal-Harzbasis.

Nach der Verschäumung der Schaumharze zu geometrischen Schaumkörpern ist es notwendig, daß der Schaumkörper eine gewisse "Reifezeit" 1 bis 7 Std. in einer Wärmekammer verbringt, um eine genügende Stabilität als solches zu erreichen und sich die erforderliche Offenporigkeit einstellen kann. Die Wärmekammer weist dabei eine Temperatur von 40° bis 70° C auf.

Die so stabilisierten Formlinge werden einer Mikrowellenbestrahlung unter Vakuum unterworfen, wobei die Leistung der Mikrowelle 1 bis 50 KW beträgt. Die Temperatur im Schaumkern 50° bis 90° C beträgt, bei einem Vakuum von 0,4 bis 0,9 bar. Der Restwassergehalt beträgt 8% als Gleichgewichtsfeuchte.

Das erfindungsgemäße Verfahren ermöglicht neben einem schnellen und gleichmäßigen Austrocknen die Vermeidung von Rißbildungen in dem Formling. Es gestattet das Trocknen von Formlingen gegebenenfalls in Dickwandtechnik, in dem die Schwindung stark reduziert bzw. ganz vermeiden läßt.

Das erfindungsgemäße Trocknen von Schaumformlingen ermöglicht ferner die Entfernung eines im Schaumherstellungsprozeß eingesetzten Treibmittels, wie z.B. des n-Pentans, und somit die Rückgewinnung desselben.

Während des Belüftens der evakuierten Kammer können gasförmige Stoffe zudosiert werden, um gewisse Effekte zu erzielen. Bei den Harnstoff/Methanal-, Phenol- oder Melaminbasis ist es dadurch möglich, daß durch Zudosieren von NH3-Gas dieses den Restgehalt an Methanal im Schaumblock bindet (Hexamethylentetramin-Bildung) und somit der Schaumformling keine oder eine sehr geringe Menge an ungebundenem Methanal aufweist.

Durch das erfindungsgemäße Verfahren entsteht demzufolge ein Produkt, das nachträglich umweltgerecht entsorgt werden kann.

### Beispiel

Ein Schaumkörper mit einem offenzelligen Schaumgefüge aus Harnstoff/Methanal mit den Ausmaßen (1 x 1 x 2)m, wird mit Mikrowellen bestrahlt, die eine Leistung von 14 kW aufweisen, und zwar bei einem Unterdruck von 0,8 bis 0,9 bar und einem Temperaturanstieg im Schaumkern bis auf ca. 70°C. Unter diesen Bedingungen, beträgt die Trocknungsdauer 40 min. Die Rest-Gleichgewichtsfeuchte beträgt 8 %. Im Gegensatz zu den einem konventionellen Trocknungsverfahren unterzogenen Schaumkörpern, sind die nach dem erfindungsgemäßen Verfahren getrockneten Schaumkörper riß- und spannungsfrei.

## Patentansprüche

1. Verfahren zum Trocknen von Schaumformlingen, worin die Formlinge einer Mikrowellenbestrahlung unterworfen werden, dadurch gekennzeichnet, daß die Formlinge der Mikrowellenbestrahlung im Unterdruck unterworfen werden.

2. Verfahren nach Anspruch 1, dadurch gekennzeichnet, daß ein großvolumiger Schaumstoffblock der Trocknung unterworfen wird.

3. Verfahren nach dem vorhergehenden Anspruch, worin der großvolumige Schaumstoffblock ein Volumen von wenigstens 1/4 m³ besitzt.

4. Verfahren nach einem der vorgehenden Ansprüche, worin der Unterdruck 0,4 bis 0,9 bar (s = 40 kPa bis 90 kPa) beträgt.

5. Verfahren nach einem der vorgehenden Ansprüche, worin die Temperatur im Schaumkern von 50 bis 90° C beträgt.

6. Verfahren nach einem der vorgehenden Ansprüche, worin die Mikrowellenbestrahlung mit einer Leistung von 1 bis 50 kW auf 1/4 bis 2 m³ Schaumstoffblöcke und für eine Dauer von 1 bis 180 Minuten durchgeführt wird.

7. Verfahren nach einem der vorgehenden Ansprüche, dadurch gekennzeichnet, daß das getrocknete Produkt einen Restwassergehalt von 6 bis 12 % aufweist.

8. Verfahren nach einem der vorgehenden Ansprüche, dadurch gekennzeichnet, daß Schaumformlinge auf Harnstoff/Methanal-Harzbasis, Phenol/Methanal-Harzbasis oder Melamin/Methanal-Harzbasis zur Anwendung kommen.

9. Verfahren nach dem vorhergehenden Anspruch, dadurch gekennzeichnet, daß die Schaumformlinge ein offenzelliges Schaumgefüge aufweisen.

10. Verfahren nach einem der vorgehenden Ansprüche, dadurch gekennzeichnet, daß bei der Belüftung der Vakuumkammer nach Beendigung der Trocknung der Belüftungsluft Gase zudosiert werden, welche dann in den Schaumformling eindringen, um diesen zu beeinflussen.

11. Verfahren nach einem der vorgehenden Ansprüche, dadurch gekennzeichnet, daß das Gas Ammoniakgas ist.

## Claims

1. Method for drying foam blanks, wherein the blanks are subjected to microwave irradiation, characterised in that the blanks are subjected to microwave irradiation under a reduced pressure.

2. Method according to claim 1, characterised in that a foam block of large volume is subjected to drying.

3. Method according to the preceding claim, wherein the foam block of large volume has a volume of at least 1/4 m³.

4. Method according to any of the preceding claims, wherein the reduced pressure is 0.4 to 0.9 bar (s = 40 kPa to 90 kPa).

5. Method according to any of the preceding claims, wherein the temperature in the foam core is from 50 to 90°C.

6. Method according to any of the preceding claims, wherein microwave irradiation is carried out with a power from 1 to 50 kW on 1/4 to 2 m³ foam blocks and for a period from 1 to 180 min.

7. Method according to any of the preceding claims, characterised in that the dried product has a residual water content from 6 to 12%.

8. Method according to any of the preceding claims, characterised in that foam blanks based on urea/formaldehyde resin, phenol/formaldehyde resin or melamine/formaldehyde resin are used.

9. Method according to the preceding claim, characterised in that the foam blanks have an open-cell foam structure.

10. Method according to any of the preceding claims, characterised in that on aeration of the vacuum chamber at the end of drying, to the aerating air are added gases which then penetrate the foam blank in order to affect it.

11. Method according to any of the preceding claims, characterised in that the gas is ammonia ga.

## Revendications

1. Procédé pour le séchage de pièces de mousse, dans lequel la pièce est soumise à un rayonnement hyperfréquence, caractérisé en ce que la pièce est soumise au rayonnement hyperfréquence en utilisant une dépression.

2. Procédé selon la revendication 1, caractérisé en ce qu'un bloc de mousse volumineux est soumis au séchage.

3. Procédé selon la revendication précédente, dans lequel le bloc de mousse volumineux possède un volume au moins égal à ¼ m³.

4. Procédé selon l'une des revendications précédentes, dans lequel la dépression est comprise entre 0,4 et 0,9 bar (s = 40 kPa à 90 kPa).

5. Procédé selon l'une des revendications précédentes, dans lequel la température du coeur de mousse est comprise entre 50 et 90 °C.

6. Procédé selon l'une des revendications précédentes, dans lequel le rayonnement hyperfréquence est réalisé avec une puissance comprise entre 1 et 50 kW sur des blocs de mousse de ¼ à 2 m³ et pendant une durée comprise entre 1 et 180 minutes.

7. Procédé selon l'une des revendications précédentes, caractérisé en ce que le produit séché présente une teneur en humidité résiduelle comprise entre 6 et 12 %.

8. Procédé selon l'une des revendications précédentes, caractérisé en ce que sont utilisées des pièces de mousse à base de résine urée/méthanal, à base de résine phénol/ méthanal ou à base de résine mélamine/méthanal.

9. Procédé selon la revendication précédente, caractérisé en ce que les pièces de mousse présentent une structure à alvéoles ouvertes.

10. Procédé selon l'une des revendications précédentes, caractérisé en ce que, lors de l'aération de la chambre à vide après la fin du séchage, on procède à une addition dosée de gaz dans l'air d'aération, lesquels pénètrent ensuite dans la pièce de mousse pour y exercer une influence.

11. Procédé selon l'une des revendications précédentes, caractérisé en ce que le gaz est du gaz ammoniac.
